# EUROPEAN PATENT APPLICATION

(11) **EP 1 720 060 A1**
(43) Date of publication of application: **08.11.2006**
(21) Application number: 05009571.0
(22) Date of filing: 02.05.2005
(51) Int. Cl.: G02F 1/13357, G02F 1/1335

(54) **Display**

(71) Applicant: Sony Ericsson Mobile Communications AB, 221 88 Lund (SE)
(72) Inventor: Kleverman, Mats, 252 43 Helsingborg (SE); Klinghult, Gunnar, 227 31 Lund (SE)
(74) Representative: Dahnér, Christer

(57) **Abstract**

A colour display unit (1) for a portable communication device, comprising:
an essentially transparent display layer (2) having a front side (2a) provided for displaying information, and a rear side (2b),
a lighting system (3) for illuminating said essentially transparent display layer (2) from the rear side or the front side, said lighting system (3) comprising a light source providing blue light, wherein red and green luminescent material (4a, b) is provided on said display layer (2) on some parts thereof, to provide red and green light when optically pumped with the blue light and in that other parts (4a) of the display layer (2) are essentially transparent, such that the blue light can be transmitted therethrough without passing the red and green luminescent material (4a, b).

In this way a brilliant display with saturated colours and high luminance, and a display that in strong sunlight is still possible to be read is provided.

## Description

### TECHNICAL FIELD

The present invention relates to a colour display unit, and a portable communication device comprising such a display unit.

### BACKGROUND OF THE INVENTION

Today, in the world of portable electronic devices provided with displays there is a trend towards colour displays. This trend is also very much present in the world of mobile communications, where more and more customers demand portable communication devices having colour displays. Typically such displays are of transparent type being illuminated by a lighting system, for instance a backlighting or a front lighting system.

Examples of colour displays are different types of LCDs (Liquid Crystal Displays). In a conventional colour LCD, the basic display colours red, green and blue are obtained by passing white light from a backlighting system, typically coming from white light emitting diodes (LEDs) thru red, green and blue (RGB) colour filters. Typically, the white LEDs are provided by using blue LEDs, whereby blue light is converted to red, green and blue light in certain proportions together resulting in a white light sensation. The colour conversion, i. e. to red, green and blue light is typically provided by in that in a first step, the blue LED light optically pumps a phosphorescence/luminescence material. In a second step, the thereby obtained white light passes thru the RGB colour filters, thereby providing the red, green and blue light, but at the same time about 70 % of the intensity of the emitted light is filtered away in the RGB filters.

A colour display, such as the above described colour LCD should be bright with good contrast. However, the power consumption of the lighting system is high, thereby for instance limiting the time the display can be switched on (herein, the term "switched on" means illuminated) in a portable communication device, such as a cellular phone.

Typically an LCD itself consumes about 0,5 mA in a so-called "standby-mode" and about 80 mA with backlighting switched on. Of course, this consumes battery power, hence reducing operating time of the portable communication device. As an example, the above described colour LCD typically consumes about 3 times higher power than should be required without colour filters.

Therefore, prior art technology has tried to reduce this problem. One way is to provide a colour filter that has a reflector behind for reflective operation. Ambient light then passes the colour filter and is reflected back. However, also this solution implies that light, in this case reflected ambient light, has to travel through the color filter, which of course is a problem because of the high absorption of light in the colour filters.

There are also purely transmissive displays, wherein light is only transmitted from backlighting. Such solutions could for instance be found in portable electronic devices such as lap-tops. However, these solutions provides poor out-door performance, hence in strong sun-light it could be hard, or even impossible to see any information on the display. Therefore, such solutions are typically not used in portable communication devices intended also for out-door use such as cellular phones.

Thus, there still exist problems with prior art that have to be overcome, or at least be reduced.

### SUMMARY OF THE INVENTION

According to an aspect, the present invention seeks to solve the problem of providing a colour display unit for a portable communication device, such as a cellular phone, that does not consume a large amount of power because of loss of light intensity in colour filters.

According to a first aspect of the invention, this problem is solved by a colour display unit for a portable communication device, comprising:
- an essentially transparent display layer having a front side provided for displaying information, and a rear side,
- a lighting system for illuminating said essentially transparent display from the rear side, said lighting system comprising a light source providing blue light, wherein red and green luminescent material is provided on, or adjacent to, said display layer on some parts thereof, to provide red and green light when optically pumped with the blue light and in that other parts of the display layer are essentially transparent, such that the blue light can be transmitted therethrough without passing the red and green luminescent material.
- an essentially transparent display layer having a front side provided for displaying information, and a rear side.

Since no colour filters are used, the power could be reduced by about a factor of 3 for a given intensity compared to a prior art colour display provided with conventional colour filters, through which the light has to pass.

Herein, the term "front side" is referred to as any side directly facing a user, even after processing. Thus, further layers, such as protective coatings etc can also be provided.

According to a second aspect of the invention, including the first aspect, the red and green luminescent material is arranged as sets of red and green sub-pixels, wherein the other parts are arranged as corresponding sub-pixels, such that sets of three sub pixels, which are red, green and transparent blue are provided.

According to a third aspect of the invention, including the second aspect, a reflector is provided such that ambient light can be reflected back and through the display layer.

According to a fourth aspect of the invention, including the third aspect, the reflector is provided behind the display layer.

According to a fifth aspect of the invention, including the fourth aspect, the luminescent material is provided on a rear side of the display layer.

According to yet an alternative aspect of the invention, including the fourth aspect, the luminescent material is provided behind the display adjacent to a rear side thereof behind the reflector.

According to a sixth aspect of the invention, including any one of the previous aspects, the lighting system is a backlighting system comprising a blue light source.

According to a seventh aspect of the invention, including any one of the previous aspects, the lighting system is a front lighting system comprising a blue light source.

According to an eight aspect of the invention, including the sixth or the seventh aspect of the invention, the blue light source is a blue light emitting diode (LED).

According to a ninth aspect of the invention, there is provided a portable communication device comprising:
a colour display unit comprising:
   - an essentially transparent display layer having a front side provided for displaying information, and a rear side,
   - a lighting system for illuminating said essentially transparent display layer from the rear side or the front side, said lighting system comprising a light source providing blue light, wherein red and green luminescent material is provided on, or adjacent to, said display layer on some parts thereof, to provide red and green light when optically pumped with the blue light and in that other parts of the display layer are essentially transparent, such that the blue light can be transmitted therethrough without passing the red and green luminescent material.

According to a tenth aspect of the invention, including the ninth aspect, the red and green luminescent material is arranged as sets of red and green sub-pixels, and in that the other parts are arranged as corresponding sub-pixels, such that sets of three sub pixels, which are red, green and transparent are provided.

According to an eleventh aspect of the invention, including the tenth aspect of the invention, a reflector is provided such that ambient light can be reflected back and through the display layer.

According to a twelevth aspect of the invention, including the eleventh aspect, the reflecor is provided behind the display layer, on a rear side thereof.

According to a thirteenth aspect of the invention, including the ninth to the twelvth aspect, the lighting system is a backlighting system comprising a blue light source.

According to a fourteenth aspect of the invention, the blue light source is a blue light emitting diode.

With the proposed invention, there is excellent emissive mode providing much lower power consumption than prior art colour displays. Legibility is better in out-door usage even if no colours could be obtained in high intensity environments since no colour filters are provided.

These and other aspects and advantages of the invention will in the following be apparent from and elucidated with reference to the embodiments described hereinafter.

### BRIEF DESCRIPTION OF THE DRAWINGS

Fig. 1 is a sectional view of a colour display unit (showing three pixels each pixel including a red, green, blue sub pixel) according to an embodiment of the invention.
Fig. 2a illustrates the same display unit as illustrated in Fig. 1, wherein Fig. 2a shows a situation when the lighting system is switched off, i. e. in a high intensity environment such as a sunny day, wherein the luminescent material is provided on a front side of the display layer.
Fig. 2b shows an alternative display unit as illustrated in Fig. 2a, wherein the luminescent material is provided on a rear side of the display layer and the reflector is provided behind the luminescent material.
Fig. 2c shows an alternative preferred display unit as illustrated in Fig. 2a or b, wherein the luminescent material is provided adjacent to the display layer behind the reflector, both provided on a rear side of (behind) the display layer.
Fig. 3 is a portable electronic device in the form of a cellular phone including a display unit according to an embodiment of the invention, which is schematically illustrated only.

### DETAILED DESCRIPTION OF THE INVENTION

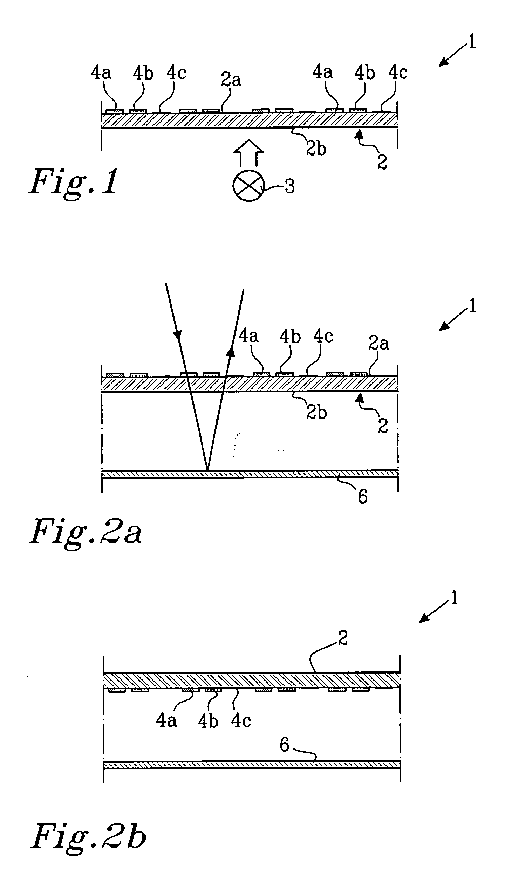

Now is referred to Fig. 1, which is a sectional view of part of a display unit 1 (herein three colour pixel units, each including three sub pixels) according to a first embodiment of the invention. For purpose of simplicity, the display unit 1 is shown schematically comprising an essentially transparent display layer 2 provided for displaying information, which in this particular case could be a display layer of a conventional liquid crystal display (LCD), operating in a manner known per se.

Of course also other types of essentially transparent display layers that can be employed for presenting information could be used without departing from the invention. Since the operation of an LCD is well known from prior art, the operating principle thereof will not be explained in detail.

The display unit 1 further comprises a blue light source 3 arranged to provide light for illuminating the display 1, in this embodiment provided as a backlighting system schematically illustrated by means of a schematically illustrated light source provided with an arrow showing the direction of light only since the arrangement thereof and it's operation are well known per se. Preferably, as is the case in this embodiment, the blue light is obtained by means of a blue LED (known per se).

On the display layer 2, typically on a "front side" 2a thereof, there is provided red and green luminescent material (phosphors) making up red and green sub pixels 4a and 4b together with a transparent blue area 4c arranged in sets of red, green and blue sub pixel areas 4a, 4b and 4c.

Herein, the term "on" is referred to include both on a front side 2a directed to a user of the display unit 1, and a rear side 2b directed in an opposite direction, i. e. the red and green luninescent material (4a and 4b) can be provided on the front side 2a or the rear side 2b of the display layer 2, of which in this embodiment the luminescent material is provided on the front side 2a thereof.

No colour filter is used (as in conventional technology) in neither of the red and green sub pixel areas 4a and 4b, but instead of red and green colour filters, luminescent material is provided, which is optically pumped (known per se) by the blue light, striking the luminescent material as backlighting (similarly operational principle as in a conventional white LED). The blue sub pixel area 4c is provided such that the blue back light passes directly thru the transparent blue sub-pixel area 4c. Hence, instead of red, green and blue (RGB) colour filters, red and green luminescent material combined with a transparent blue sub-pixel area is provided, such that red and green phosphors and transparent blue area together provide the colours for the colour display 1.

Fig. 2a-c illustrate the same colour display 1 as in Fig. 1, but provided with an additional reflector 6 typically provided below the backlighting system 3.

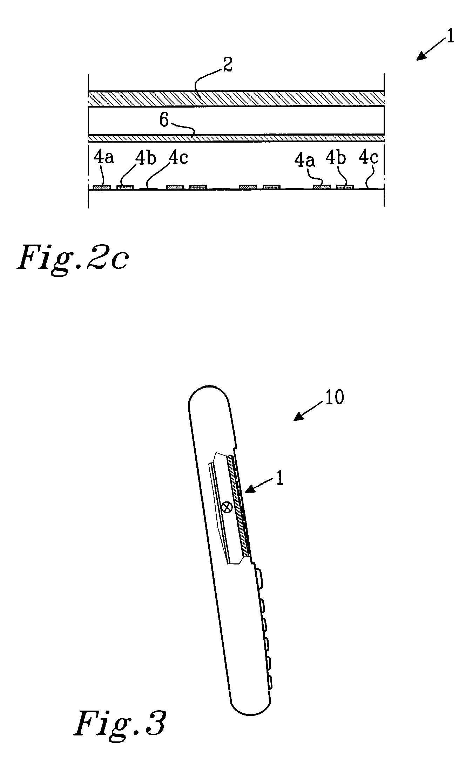

As is evident from Fig. 2a-c, no colours can be obtained using this solution in high intensity environments such as outdoors a sunny day, since no colour filters are present for reflected ambient light, as seen in Fig. 2a, (shown by means of a reflection arrow illustrating how ambient light is reflected back through the transparent display layer 2), but grey-scale ("black and white") images can be obtained either by providing a reflector 6 behind the transparent display layer 2 (as illustrated) or alternatively by using a reflector 6 such as a semi-reflective film that can be provided above the red and green sub pixels 4a and 4b, as seen in Fig. 2c, or utilize the transparent blue area 4c and possibly reflections from the red and green luminescent sub pixel areas 4a and b.

In the alternative, as seen in Fig. 2c, in which the reflector 6 is located above the pixels, the display layer 2 has to be located above the reflector 6 to present information to a user or alternatively grey-scale information has to be provided by means of the blue area 4c instead.

The size of the sub-pixel areas 4a and b selected depends on what performance is desired. A large sub-pixel area 4a or b implies a larger luminescent area for emitted light, but reduces also emissive performance of the blue sub-pixel 4c, since the area 4c for direct transmission of light, i. e. without passing any essentially non-transparent area from back lighting system is reduced. Therefore, a balance between these requirements has to be taken into account. Moreover, also to select area of the reflector 6 (if any), is obvious for a person skilled in the art to achieve, for instance by experiments, and will therefore not be described in more detail herein.

Herein, only three sets of three sub-pixels 4a, b and c is shown because of simplicity. Typically, a color display 1 contains a plurality of sets of three sub-pixels. This will not be further described, since it is conventional technique for color display pixels.

The reflector 6 can be made of any suitable type of reflecting material such as metals, for instance aluminium, silver, metal coated polymer material, or the like.

Fig. 2b shows an alternative display unit as illustrated in Fig. 2a, wherein the luminescent material 4a and b is provided on a rear side 2b of the display layer 2 and the reflector 6 is provided behind the luminescent material 4a and b.

Fig. 2c shows an alternative preferred display unit as illustrated in Fig. 2a or b, wherein the luminescent material 4a and b is provided adjacent to the display layer 2 behind the reflector 6, both provided on a rear side 2b of the display layer 2.

In emissive mode, the display unit has well defined saturated colors and high luminance. In out door use, they remain, still visible at moderate ambient light conditions, whereas, when ambient light becomes very intense, a typical situation a sunny day outdoors, the display will gradually appear as a grey-scale display, however, which is still possible to read. When the lighting system is switched off, the display operates in the reflective mode illustrated in Fig. 2. In this mode, there is no colour information, rendering the display to appear as a grey-scale display; however, it can display all information a color display can, but without colors (since no colour filters are provided).

The lighting system is not limited to backlighting only, but also other systems such as front lighting are also applicable. When using front lighting, som kind of anti-reflexion treatment may be necessary to comply with reflectes from red and green areas, such that unwanted blue light is obtained. This, is not further described since it is within the capability for a person skilled in the art of displays to design by rutine experiments and/or using common general knowledge.

With the proposed display unit according to the invention, there is no need for reflected light to travel through a color filter when operating in reflective mode, i. e. without the lighting system turned on.

Moreover, the invention could be implemented in both passive (STNC) and active (TFT) devices (technology), in any type of portable electronic device such as clamshell or stick mobile phone, or any other mobile communication application requiring low power consumption.

## Claims

1. A colour display unit for a portable communication device, comprising:
- an essentially transparent display layer (2) having a front side (2a) provided for displaying information, and a rear side (2b),
- a lighting system (3) for illuminating said essentially transparent display layer (2) from the rear side (2b) or the front side (2a), said lighting system (3) comprising a light source providing blue light, wherein red and green luminescent material (4a, b) is provided on said display layer (2) on, or adjacent to, some parts thereof, to provide red and green light when optically pumped with the blue light and in that other parts (4c) of the display layer (2) are essentially transparent, such that the blue light can be transmitted therethrough without passing the red and green luminescent material (4a, b).

2. Display unit according to claim 1, wherein the red and green luminescent material (4a, b) is arranged as sets of red and green sub-pixels, wherein the other parts (4c) are arranged as corresponding sub-pixels, such that sets of three sub pixels, which are red, green and transparent blue (4a, b, c) are provided.

3. Display unit according to claim 2, wherein a reflector (6) is provided such that ambient light can be reflected back and through the display layer (2).

4. Display unit according to claim 3, wherein a reflector (6) is provided behind the display layer (2).

5. Display unit according to claim 4, wherein the red and green luminescent material (4a, b) is provided on a rear side (2b) of the display layer (2).

6. Display unit according to claim 4, wherein the red and green luminescent material (4a, b) is provided behind the display adjacent to a rear side thereof (2b) behind the reflector (6).

7. Display unit according to any one of the claims 1-6, wherein the lighting system (3) is a backlighting system comprising a blue light source.

8. Display unit according to any one of the claims 1-6, wherein the lighting system (3) is a front lighting system comprising a blue light source.

9. Display unit according to claim 7 or 8, wherein the blue light source (3) is a blue light emitting diode (LED).

10. Portable communication device comprising:
a colour display unit (1) comprising:
- an essentially transparent display layer (2) having a front side provided for displaying information, and a rear side,
- a lighting system (3) for illuminating said essentially transparent display layer (2) from the rear side or the front side, said lighting system (3) comprising a light source providing blue light, wherein red and green luminescent material (4a, b) is provided on, or adjacent to said display layer (2) on some parts thereof, to provide red and green light when optically pumped with the blue light and in that other parts (4c) of the display layer (2) are essentially transparent, such that the blue light can be transmitted therethrough without passing the red and green luminescent material (4a, b).

11. Portable communication device according to claim 10, wherein the red and green luminescent material is arranged as sets of red and green sub-pixels (4a, b), and in that the other parts (4c) are arranged as corresponding sub-pixels, such that sets of three sub pixels, which are red, green and transparent (4a, b, c) are provided.

12. Portable communication device according to claim 11, wherein a reflector (6) is provided such that ambient light can be reflected back and through the display layer (2).

13. Portable communication device according to claim 12, wherein the reflector (6) is provided behind the display layer (2).

14. Portable communication device according to any one of the claims 10-13, wherein the lighting system (3) is a backlighting system comprising a blue light source.

15. Portable communication device according to claim 14, wherein the blue light source (3) is a blue light emitting diode (LED).
